# EUROPEAN PATENT SPECIFICATION

(11) **EP 1 173 347 B1**
(45) Date of publication and mention of the grant of the patent: **23.06.2004**
(21) Application number: 00929976.9
(22) Date of filing: 18.04.2000
(51) Int. Cl.: B60P 7/04, B60J 7/10, B62D 33/02

(54) **DEVICE AT TRUCKS HAVING COVER OR CABINET SUPPORT**
RUNGE FÜR LASTKRAFTWAGEN
DISPOSITIF POUR CAMIONS POSSEDANT UNE BACHE OU UN SUPPORT DE COMPARTIMENT

(30) Priority: 27.04.1999 SE 9901533
(43) Date of publication of application: 23.01.2002
(73) Proprietor: Rosén, Göran, 640 50 Björnlunda (SE)
(72) Inventor: Rosén, Göran, 640 50 Björnlunda (SE)
(74) Representative: Hammond, Andrew David
(86) International application number: PCT/SE2000/000735
(87) International publication number: WO 2000/064703

(56) References cited:
- EP-A1- 0 825 050
- EP-A1- 0 831 001
- EP-A1- 0 940 326
- EP-A2- 0 335 427
- EP-A2- 0 426 484
- WO-A1-92/00869
- WO-A1-98/24679
- DE-U1- 9 216 912

## Description

The present invention is a further development of the invention described in the Swedish patent application no. 9900907-8 and refers to a device at trucks of the kind that comprises a cover or cabinet support provided on the platform of the vehicle, which support comprises a number of pillars being connectable to the roof structure of the platform and fixable to the platform by means of a platform locking mechanism, which pillars are formed to extend from pillar fasteners provided at the edge beam of the platform to the roof structure, wherein each pillar at its lower portion is provided with a support means pivotable around an axis relative the pillar, which support means is formed to be brought to supporting cooperation with a holder fastened to the edge beam, and which support means is provided to be fixed to the edge beam of the platform by means of the platform locking mechanism of the pillar.

### BACKGROUND OF THE INVENTION AND THE PROBLEM

To be able utilize the loading volume to the maximum, i. e. up to the roof structure of the cover or cabinet support, it is necessary to be able lift the roof, in any case to that extent which corresponds to the height of the roof handrail. Today this is done by means of jacks, by which the roof can be cranked up and down manually. This structure is expensive, can be easily damaged during loading and unloading and takes time to operate.

### THE OBJECT OF THE INVENTION AND THE SOLUTION OF THE PROBLEM

The object of the invention is to provide a device of the type previously mentioned, which:
- is simple, cheap and rigid;
- allows a quick lifting of the roof up and down;
- can be varied with respect to the lifting height;
- exerts a force directed upwards on the entire pillar;
- can be provided inside the pillar without changing its outer dimensions.

These objects have been solved through the features of the characterising portion of claim 1.

### DESCRIPTION OF THE DRAWINGS

In the following, the invention will be described in an embodiment, with reference to accompanying drawings.

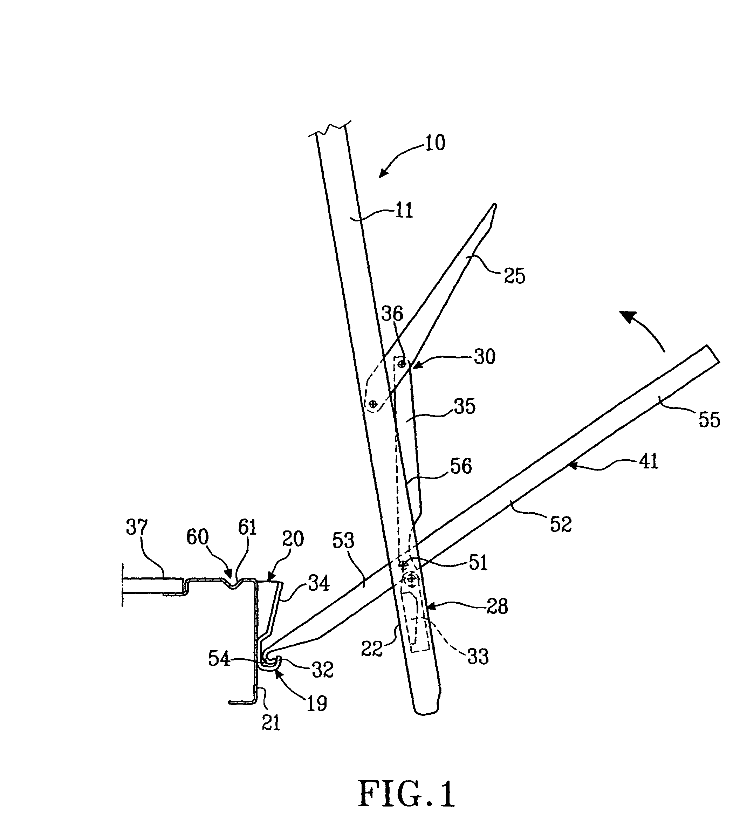

Fig. 1 shows the lower portion of a pillar, according to the invention, in side view during the lifting process for connection with the pillar fastener.

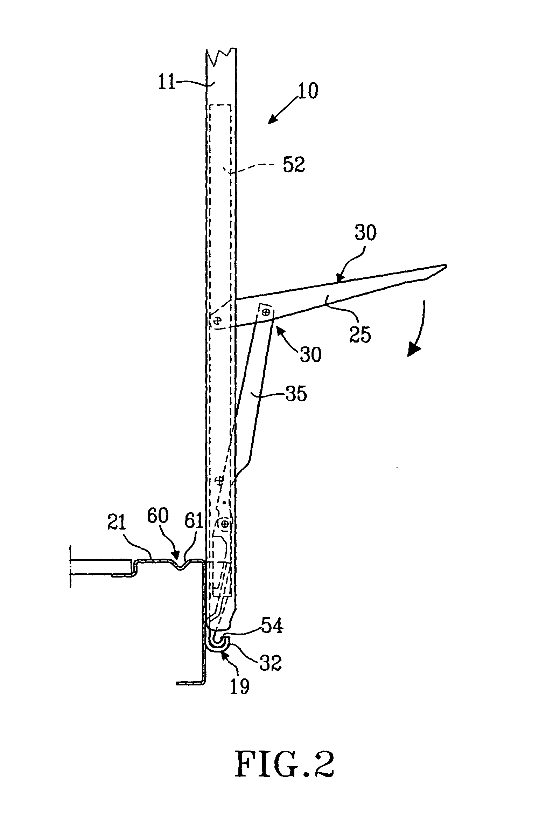

Fig. 2 is a view analogous to Fig. 1, where the pillar is placed in the platform fastener and the locking mechanism is in position for locking against the platform.

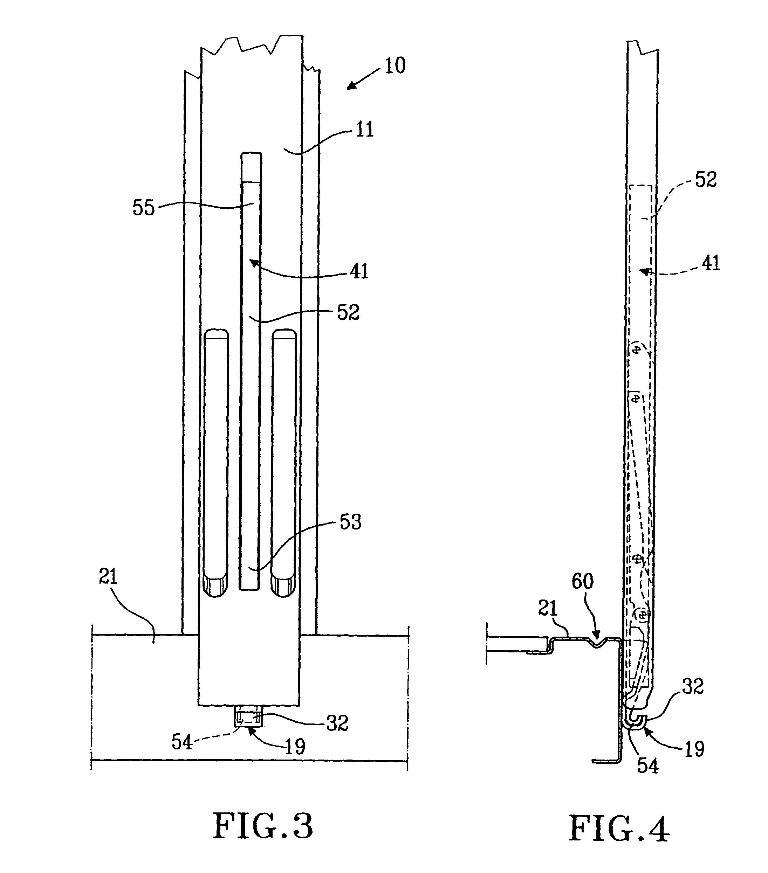

Fig. 3 shows the lower portion of the pillar in front view.
Fig. 4 shows the pillar in side view locked against the platform.
Fig. 5 is a view analogous to Fig. 1 showing a pillar during lifting thereof from the platform.

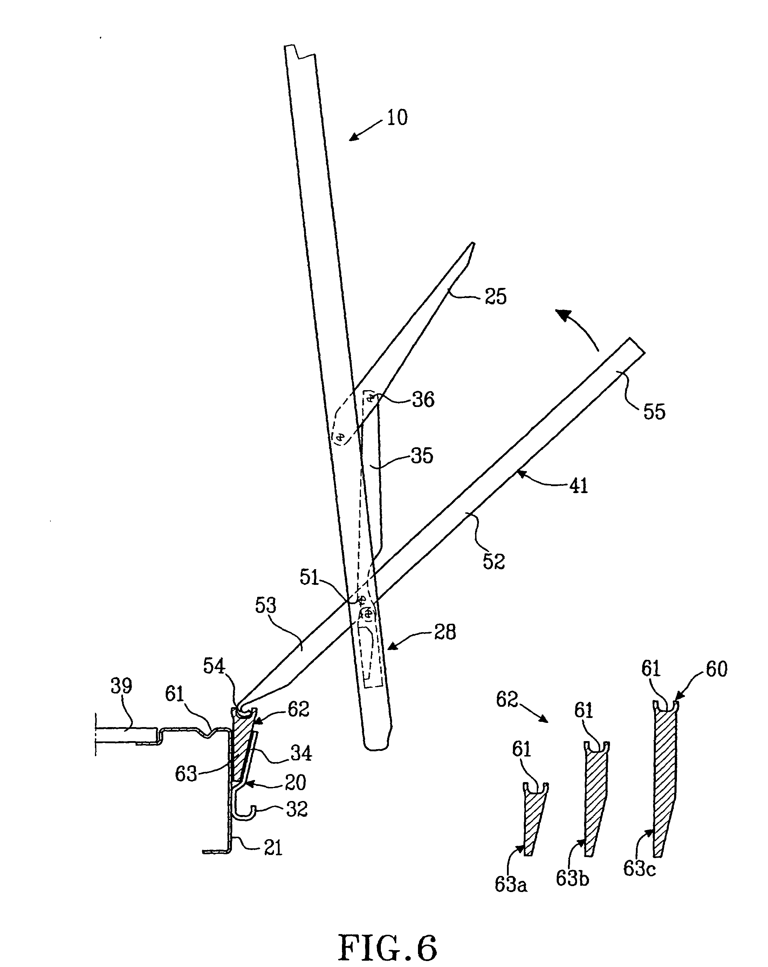

Fig. 6 shows a way to provide variable lifting positions of the pillar.

### DESCRIPTION OF PREFERRED EMBODIMENTS

The pillar according to the invention is described in detail in the above mentioned patent application and for corresponding members, the same reference numerals have been used in both applications. Thus, the pillar in its entirety is referred to as 10 and extends from a pillar fastener 20 at the platform 39 of the vehicle to the roof structure to a cover or cabinet support provided above the platform. The pillar comprises a pillar housing 11, which cross section has the form of a closed hole profile.

The lower end portion of the pillar 10 is provided with a platform locking mechanism 28 adapted to cooperate with a pillar fastener 20, which is attached to the edge beam 21 of the platform. In the back side of the lower portion of the pillar housing, a cavity 22 is cut out, through which, for instance, the pillar fastener 20 can pass, when the pillar is brought into contact with the edge beam 21. The lower end of the pillar fastener 20 is formed as a holder 19, i. e. in the present example it is bended to a hook 32. The lower portion of the pillar 10 is provided with a support means 41 pivotable round an axis 51, which support means is formed as double-armed lever 52, which in its one end position is retractable into the pillar housing 11. The lower lever arm 53 of the lever 52 is provided with a transverse axle 54, which is to be placed in the hook formed holder 19, when the pillar 10 shall be mounted in the pillar fastener 20. To be able to turn the lever 52, the cavity 22 has such a size that the lower lever arm 53 can pass through it. The upper lever arm 55 of the lever 52 is formed as a handle. Similarly, an opening 56 is cut out of the front plate 23 of the pillar housing, so that the upper lever arm 55 can be swung in and out of the pillar housing. The end portion of the lower lever arm 53 with the pivotable axle 54 is situated below and outside the end of the pillar, which means partly that the pillar, in mounted position, rests against the hook 32 via the end portion of the lever arm 53 and partly that the lower end of the pillar can be led out from the edge beam 21 with maintained support via the lever.

Besides the platform locking mechanism, the pillar housing 11 is provided with a flap locking mechanism, not shown, which are both operated by a common operation device 30. In a known way, the platform locking mechanism 28 consists of at least one locking wedge 33, which cooperates with guide bars 34 provided at the platform fastener 20. The upper end of the locking wedge 33 is pivotable connected to a connection link 35, which in turn is connected to said operation arm 25 via a first pivot axle 36.

The mounting of the pillar to the platform 21 is done through that the operation arms 25 are opened, extended out, providing the roof locking mechanism, as well as the flap locking mechanism and the platform locking mechanism 28 to be disengaged, after which the pivot axle 54 of the lever 52 is placed in the hook 32. The pillar can now be raised against the roof structure. Afterwards, the operation arms 25 are folded up, which lock the pillar to the pillar fastener 20. Because the support means 41 is formed as a lever 52, no major force is needed to put the pillar in place. Even if the roof structure would have a member that is hanging down, the pillar can be lifted by the lever by exposing it to a pressure from beneath.

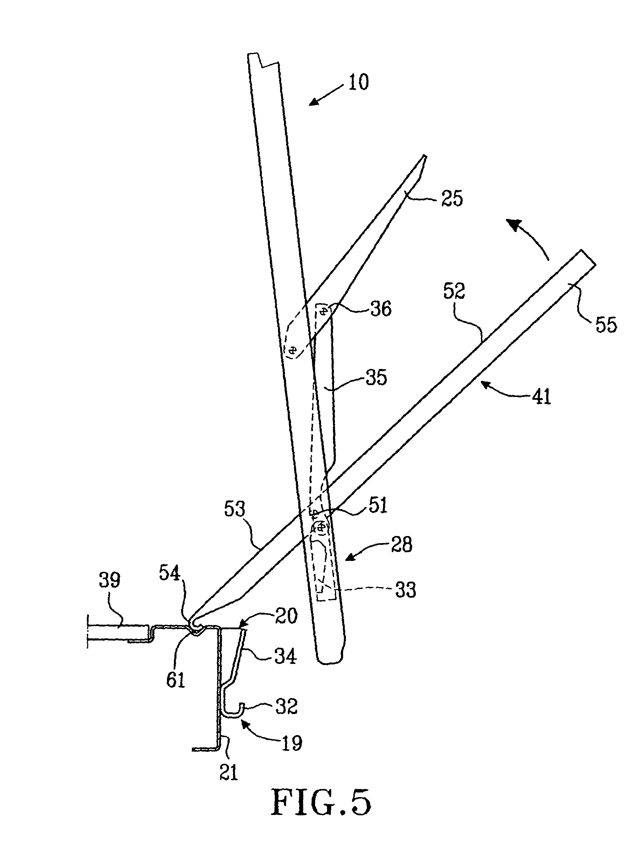

The disengagement of the pillar is made in reversed order. After the operation arm 25 has been folded down, the upper lever arm 55 can be swung out of the pillar housing 11, around the axis 51, whereby its lower portion swings out of the pillar fastener 20. The pivot point of the pillar is located at the same level as the roof structure. In this state the lower portion of the pillar is situated outside the platform fastener 20. The pillar may then be either lifted down, displaced sidewards or else the pivot axle 54 of the lever 52 can be placed in a rest 60, e. g. in the form of a recess 61 in the upper portion of the edge beam 21, see Fig. 5, after which the pillar can be lifted, through that the lever 52 is swung against the pillar 10. The lifting height is adapted to the distance which is needed to be able to utilize the loading volume to the maximum.

If variable lifting positions are desired or if a rest 60 is missing in the edge beam 21, the locking shackle 34 of the roof fastener 20 can be utilized to provide a detachable rest 60 in the form of an extension means 62, e. g. a wedge 63, which is provided with a recess 61 in its upper end. Wedges 63 of different lengths 63a, 63b, 63c, etc, can be applied if different lifting heights are desired.

## Claims

1. Device at trucks of the kind that comprises a cover or cabinet support provided on the platform (39) of the vehicle, which support comprises a number of pillars (10) being connectable to the roof structure of the platform and fixable to the platform by means of a platform locking mechanism, which pillars are formed to extend from pillar fasteners (20) provided at the edge beam (21) ofthe platform to the roof structure, wherein the lower portion of each pillar is provided with a support means (41) pivotable around an axis (51) relative to the pillar, which axis is arranged so as to be parallel with the extension of the edge beam (21) along the platform, which support means has the pivot axis (51) located between the ends of the support means and is formed to be brought to supporting cooperation with a holder (19) fastened to the edge beam, and which support means (41) is provided to be fixed to the edge beam (21) of the platform (39) by means of the platform locking mechanism of the pillar,
***characterized in,***
**that** said device further comprises a rest (60) for the support means (41) placable or provided at the holder (19) and/or at the platform (39), which rest is located on a higher level relative to the holder (19) of the pillar fastener (20).

2. Device according to claim 1,
***characterized in,***
**that** the rest (60) consists of a recess (61) in the edge beam (21) of the platform (39).

3. Device according to claim 1,
***characterized in,***
**that** the rest (60) is provided in the form of an extension means (62) insertable in the pillar fastener (20).

4. Device according to claim 3,
***characterized in,***
**that** the extension means (62) consists of a wedge (63).

5. Device according to claim 3 or 4,
***characterized in,***
**that** extension means (62) of different lengths are available.

## Patentansprüche

1. Vorrichtung an Lastkraftwagen des Typs, der einen Planen- oder Kastenträger, der auf der Ladebaugruppe (39) des Fahrzeugs vorgesehen ist, umfasst, wobei der Träger zahlreiche Stützen (10) aufweist, die mit der Dachstruktur der Ladebaugruppe verbunden werden kann und an der Ladebaugruppe mittels eines Ladebaugruppen-Verriegelungsmechanismus befestigt werden kann, wobei die Stützen so ausgebildet sind, dass sie sich von Stützenbefestigungseinrichtungen (20), die an dem Randholm (21) der Ladebaugruppe vorgesehen sind, zu der Dachstruktur erstrecken, wobei der untere Abschnitt jeder Stütze mit Unterstützungsmitteln (41) versehen ist, die um eine Achse (51) relativ zu der Stütze schwenkbar sind, wobei die Achse so angeordnet ist, dass sie zu der Erstreckung des Randholms (21) längs der Ladebaugruppe parallel ist, wobei sich die Schwenkachse (51) der Unterstützungsmittel zwischen den Enden der Unterstützungsmittel befindet und die Unterstützungsmittel so ausgebildet sind, dass sie mit einer an dem Randholm befestigten Halterung (19) unterstützend zusammenwirken können und dazu vorgesehen sind, am Randholm (21) der Ladebaugruppe (39) mittels des Ladebaugruppen-Verriegelungsmechanismus der Stütze befestigt zu werden,
**dadurch gekennzeichnet,**
**dass** die Vorrichtung ferner eine Auflage (60) für die Unterstützungsmittel (41) umfasst, die an der Halterung (19) und/oder an der Ladebaugruppe (39) angeordnet oder vorgesehen sein kann und sich auf einer höheren Ebene in Bezug auf die Halterung (19) der Stützenbefestigungseinrichtung (20) befindet.

2. Vorrichtung nach Anspruch 1,
**dadurch gekennzeichnet,**
**dass** die Auflage (60) aus einer Aussparung (61) im Randholm (21) der Ladebaugruppe (39) besteht.

3. Vorrichtung nach Anspruch 1,
**dadurch gekennzeichnet,**
**dass** die Auflage (60) die Form von Verlängerungsmitteln (62) hat, die in die Stützenbefestigungseinrichtung (20) einschiebbar sind.

4. Vorrichtung nach Anspruch 3,
**dadurch gekennzeichnet,**
**dass** die Verlängerungsmittel (62) aus einem Keil (63) bestehen.

5. Vorrichtung nach Anspruch 3 oder 4,
**dadurch gekennzeichnet,**
**dass** die Verlängerungsmittel (62) mit verschiedenen Längen verfügbar sind.

## Revendications

1. Dispositif pour camions du type comprenant une bâche ou un support de compartiment prévus sur la plate-forme (39) du véhicule, ledit support comprenant une pluralité de poteaux (10) pouvant être reliés à la structure de toit de la plate-forme et être fixés à la plate-forme au moyen d'un mécanisme de verrouillage à la plate-forme, lesdits poteaux étant conçus pour s'étendre depuis des éléments de fixation (20) de poteaux, prévus au niveau du longeron (21) de la plate-forme, jusqu'à la structure de toit, la partie inférieure de chaque poteau étant dotée d'un moyen de support (41) apte à pivoter autour d'un axe (51) par rapport au poteau, lequel axe est agencé de manière à être parallèle à la dimension principale du longeron (21) le long de la plate-forme, lequel moyen de support voit l'axe de pivotement (51) situé entre ses extrémités et est conçu pour être amené à coopérer en appui avec un réceptacle (19) fixé au longeron, et ledit moyen de support (41) étant prévu pour être fixé au longeron (21) de la plate-forme (39) au moyen du mécanisme de verrouillage du poteau à la plate-forme, **caractérisé en ce que** ledit dispositif comprend en outre un appui (60) pour le moyen de support (41) susceptible d'être placé ou étant prévu au niveau du réceptacle (19) et/ou de la plate-forme (39), lequel appui se situe plus haut que le réceptacle (19) de l'élément de fixation (20) du poteau.

2. Dispositif selon la revendication 1, **caractérisé en ce que** l'appui (60) consiste en un évidement (61) dans le longeron (21) de la plate-forme (39).

3. Dispositif selon la revendication 1, **caractérisé en ce que** l'appui (60) est conçu sous la forme d'une rallonge (62) pouvant être insérée dans l'élément de fixation (20) du poteau.

4. Dispositif selon la revendication 3, **caractérisé en ce que** la rallonge (62) consiste en une cale (63).

5. Dispositif selon la revendication 3 ou 4, **caractérisé en ce que** des rallonges (62) de différentes tailles sont disponibles.
